# EUROPÄISCHE PATENTSCHRIFT

(11) **EP 1 147 369 B1**
(45) Veröffentlichungstag und Bekanntmachung des Hinweises auf die Patenterteilung: **12.03.2003**
(21) Anmeldenummer: 99963222.7
(22) Anmeldetag: 12.11.1999
(51) Int. Cl.: G01B 17/00

(54) **VORRICHTUNG ZUR ABSTANDSMESSUNG**
DEVICE FOR MEASURING DISTANCE
DISPOSITIF DE MESURE DE DISTANCES

(30) Priorität: 21.12.1998 DE 19859202
(43) Veröffentlichungstag der Anmeldung: 24.10.2001
(73) Patentinhaber: TRW Automotive Electronics & Components GmbH & Co. KG, 78315 Radolfzell (DE)
(72) Erfinder: LEMCKE, Sören, D-78343 Gaienhofen-Horn (DE); HORA, Peter, D-86529 Schrobenhausen (DE)
(74) Vertreter: Eder, Christian, Dipl.-Ing.
(86) Internationale Anmeldenummer: DE9903609
(87) Internationale Veröffentlichungsnummer: WO00037886

(56) Entgegenhaltungen:
- DE-A- 3 006 107
- DE-A- 3 820 883
- US-A- 4 385 522
- US-A- 5 241 287
- US-A- 5 629 681

## Beschreibung

Die Erfindung betrifft eine Vorrichtung zur Abstandsmessung mit den Merkmalen des Oberbegriffs des Patentanspruchs 1.

In der KFZ-Technik existiert häufig die Aufgabenstellung, den Abstand zwischen zwei Objekten mit möglichst einfachen und kostengünstigen Mitteln zu messen. Beispielsweise kann es erforderlich sein, die Bewegung eines Achselements, beispielsweise der Radaufhängung relativ zum Fahrzeugchassis zu erfassen, um eine adaptive Fahrwerkeinstellung zu ermöglichen. Hierzu kann beispielsweise die Bewegung des beweglichen Teils eines Stoßdämpfers erfasst werden.

Ein anderes Anwendungsbeispiel findet sich auf dem Gebiet der AirbagSteuerung. Beispielsweise kann die zeitliche Ansteuerung der Airbag-Zündung und/oder die Ansteuerung der unterschiedlichen Zündstufen des Airbags abhängig von der Position des betreffenden Insassen erfolgen. Hierzu kann die Erfassung der Position des betreffenden Sitzes erforderlich sein, die dann als ungefähres Maß für den Abstand der Person vom Ort des Airbag dient.

Entsprechende Vorrichtungen zu Abstandsmessungen sind in vielfältigen Ausführungsformen bekannt. Da in vielen Anwendungsfällen, so auch in den vorstehend kurz erläuterten Fällen, die Bestimmung des absoluten Abstands erforderlich ist, müssen gegenüber Inkrementalgebern meist aufwendigere und teurere Absolutwertgeber eingesetzt werden. In den meisten Fällen muss auch auf die bekannte Methode verzichtet werden, einen Inkrementalgeber einzusetzen und den Absolutwert mittels eines Initialisierungsvorgangs zu bestimmen, in dem das zu erfassende Objekt in eine bekannte Ausgangssituation bewegt und ausgehend von dieser Position mittels des Inkrementalgebers die absolute Position des beweglichen Elements bestimmt wird. Denn beispielsweise bei der Erfassung der Position eines KFZ-Sitzes wäre es hierzu erforderlich, den Sitz zunächst in eine entsprechende Ausgangsposition zu bewegen. Auch eine Speicherung des jeweils auf diese Weise bestimmten letzten Absolutwerts nach dem Ausschalten der Zündung ist aus Sicherheitsgründen nicht als zulässig zu erachten. In diesem Fall könnte es beispielsweise nach dem Abklemmen und wieder Anklemmen der Batterie zu entsprechenden Fehlsteuerungen des Airbags kommen.

Übliche Absolutwertgeber zur Erfassung der Position eines bewegbaren Objekts funktionieren auf induktiver oder kapazitiver Basis, d. h. bei der Bewegung des zu erfassenden Objekt wird die Induktivität bzw. Kapazität eines entsprechenden Sensors verändert.

Des Weiteren ist es bekannt, beispielsweise die Position einer Person auf einem KFZ-Sitz mittels Ultraschall zu erfassen. Im einfachsten Fall handelt es sich auch hierbei um eine Abstandsmessung, beispielsweise der Messung des Abstands des Kopfs oder Oberkörpers der Person von der Airbag-Position.

Darüber hinaus ist der Einsatz von Ultraschall-Sendern- und Empfängern der Abstandsmessung auch im Fall von Park-Hilfsvorrichtungen bekannt.

Bei der Erfassung der Position eines Objekts mit Ultraschall wird üblicherweise die Methode der Messung der Laufzeit eines Impulszuges zwischen seinem Aussenden und seinem Detektieren angewandt. Hierzu kann entweder direkt das ausgesandte Ultraschall-Signal oder das an dem betreffenden Objekt reflektierte Signal erfasst werden. US-A-4 385 522 beschreibt z.B. ein Teleskoprohr mit ineinander greifenden Rohrelementen, bei dem an der Rohrelement-Stirnseite ein Ultraschall-Sender/Empfänger angebracht ist.

Die bisher bekannten Vorrichtungen zur Abstandsmessung sind jedoch meist nur mit entsprechendem Aufwand für den Anwendungsfall einsetzbar, dass in einem KFZ die Position eines bewegbaren Objekts erfasst werden soll. Dies gilt insbesondere für den Fall großer Stellwege des Objekts.

Vorrichtungen zur Abstandsmessung, die auf Basis von Ultraschall funktionieren, weisen zudem den Nachteil auf, dass der Signalweg durch andere Objekte gestört werden kann und dies somit zu entsprechenden Fehlsteuerungen der anzusteuernden Aktoren kommen kann.

Ausgehend von diesem Stand der Technik liegt der Erfindung die Aufgabe zugrunde, eine Vorrichtung zur Abstandsmessung, insbesondere zur Anwendung in der KFZ-Technik, zu schaffen, welche einen einfachen und kostengünstigen Aufbau aufweist, welche auf einfache Weise in ein Fahrzeug integrierbar ist und welche mit ausreichender Sicherheit und Genauigkeit die Erfassung der Position bzw. des Abstands eines vorzugsweise beweglichen Objekts von einem Referenzpunkt ermöglicht.

Die Erfindung löst diese Aufgabe mit den Merkmalen des Patentanspruchs 1.

Die Erfindung geht von der Erkenntnis aus, dass durch die Verwendung eines Teleskoprohrs mit wenigstens zwei ineinandergreifenden Rohrelementen, an welchen das erforderliche Sendeelement bzw. die erforderlichen Empfangselemente vorgesehen sind, eine unbeabsichtigte Beeinträchtigung der Abstandserfassung durch Störobjekte ausgeschlossen ist. Zudem ermöglicht dieser Aufbau der erfindungsgemäßen Vorrichtung die komplette Vormontage der Vorrichtung, bevor diese schnell und einfach in das Fahrzeug eingebaut werden kann. Das innere Rohrelement des Teleskoprohres kann dabei auch durch ein im äußeren Rohrelement verschiebbares Element ersetzt sein.

In einem die Meßtechnik erläuterden Beispiel sind das Sendeelement und/oder das Empfangselement an Stirnseiten oder an senkrecht zur Achse des Teleskoprohrs verlaufenden Zwischenwandungen der Rohrelemente vorgesehen. Hierdurch können sowohl das Sendeelement als auch das Empfangselement im Wesentlichen in der Achse des Rohrs positioniert werden, so dass das Signal auch im Wesentlichen in der Rohrachse verläuft und demzufolge keine komplizierte Signalauswertung unter Berücksichtigung von Reflexionen an der Rohrwandung erforderlich ist.

Das Signal des Sendeelementes kann auch über starre oder flexible Wellenleiter, beispielsweise flexible Kunststoffschläuche dem Teleskoprohr zugeführt werden. In diesem Fall muss selbstverständlich die Länge des Wellenleiters zwischen dem Sendeelement und dem Teleskoprohr bzw. dem betreffenden Ende des zu messenden Abstands bei der Ermittlung des Abstands aus der Signallaufzeit und der Signalgeschwindigkeit berücksichtigt werden.

In gleicher Weise kann das Empfangssignal auch dem Sendeelement über einen entsprechenden Wellenleiter zugeführt werden, wobei auch diese Länge bei der Abstandsermittlung zu berücksichtigen ist. Dies gilt selbstverständlich nicht nur für die Länge des Wellenleiters, sondern auch für eine Teillänge des Teleskoprohres, wenn Sende- bzw. Empfangselement nicht an den Endpunkten der zu messenden Strecke angeordnet sind, wobei der betreffende Teil des Teleskoprohres in diesem Fall als Teil des vorgenannten Ankopplungswellenleiters aufgefasst werden kann.

Des Weiteren ist bei dem die Meßtechnik erläuternden Beispiel an demjenigen Rohrelement, an dem das Sendeelement angeordnet ist, ein weiteres Empfangselement vorgesehen. Dieses dient dazu, um durch die Messung der Signallaufzeit zwischen dem Sendeelement und dem weiteren Empfangselement unter Verwendung des bekannten Abstands dieser beiden Elemente die Signalgeschwindigkeit zu bestimmen. Diese kann dann zur Ermittlung eines sehr genauen Absolutwerts für den Abstand zwischen dem Sendeelement und dem eigentlichen Empfangselement verwendet werden.

Dieses weitere Empfangselement kann auch an einem Ankopplungswellenleiter zum Teleskoprohr vorgesehen sein oder mit einem weiteren (Auskopplungs-) Wellenleiter mit dem Ankopplungswellenleiter oder dem Teleskoprohr verbunden sein.

Auf diese Weise können Toleranzen in der Signalfrequenz bzw. Temperatureinflüsse, die sich auf die Signalgeschwindigkeit auswirken (Dichte des Mediums) kompensiert werden.

Selbstverständlich kann hierzu das weitere Empfangselement auch an demjenigen Rohrelement vorgesehen sein, an welchem das eigentliche Empfangselement angeordnet ist, oder an bzw in einem Auskopplungswellenleiter zwischen Teleskoprohr und Empfangselement. Durch die Kenntnis des Abstands zwischen den beiden Empfangselementen und der erfassten Signallaufzeit zwischen den beiden Empfangselementen kann dann wiederum die Signalgeschwindigkeit bestimmt werden.

Obwohl mit diesem erfindungsgemäßen Prinzip zur Abstandsmessung sowohl elektromagnetische Wellen einschließlich des optischen Spektrums als auch akustische Wellen einsetzbar sind, bieten sich letztere aufgrund der Tatsache an, dass entsprechende Sende- und Empfangselemente kostengünstig herstellbar sind und auch die erforderliche Auswerteelektronik infolge der relativ geringen Signalgeschwindigkeit, d.h. der Ausbreitungsgeschwindigkeit des Signals zwischen dem Sende- und dem Empfangsort, einen einfachen und kostengünstigen Aufbau haben kann.

Weiterhin können die Umfangswandungen des Teleskoprohrs Durchbrüche zur Dämpfung von den Wandungen reflektierten Signalanteilen aufweisen bzw. um das Reflexionsvermögen der Wandungen zu reduzieren. Selbstverständlich können anstelle von oder zusätzlich zu derartigen Durchbrüchen an den Innenwandungen der Rohrelemente entsprechende dämpfende Materialien vorgesehen sein, oder die Innenwandungen mit entsprechenden geometrischen Dämpfungselementen versehen sein.

Das Empfangselement kann sowohl an dem dem Empfangselement gegenüberliegenden Ende des Teleskoprohrs bzw. in einem entsprechenden Endbereich des Teleskoprohrs vorgesehen sein oder auch an derselben Position wie das Sendeelement. Im ersteren Fall wird das Sendesignal direkt erfasst und im zweiten Fall das an einer entsprechenden Wandung innerhalb des wenigstens einen weiteren Rohrelements vorgesehenen reflektierenden Wand.

Das Sendeelement und das Empfangselement können auch als integriertes Sende/Empfangselement ausgebildet sein. Im Fall eines Ultraschallwandlers kann dieser sowohl als Send- als auch als Empfangselement dienen. In diesem Fall ist jedoch darauf zu achten, dass die sogenannte Blindzeit des Wandlers geringer ist, als die geringste zu messende Laufzeit des Signals. Eine derartige Blindzeit entsteht dadurch, dass der Wandler nach dem Abschalten des Sendesignals eine gewisse Zeit nachschwingt und in dieser Zeit der Wandler nicht mit ausreichender Genauigkeit als Empfangselement dienen kann.

Weiterhin kann die Auswerte- und Steuereinheit, welche das Sendeelement ansteuert und welcher Signale der Empfangselemente zur Auswertung zugeführt sind, mit dem Teleskoprohr integriert ausgebildet sein.

Ansprüchen Ausführungsformen der Erfindung ergeben sich aus den abhängigen.

Die Meßtechnik und die Erfindung wird nachfolgend anhand der Zeichnungen näher erläutert. Es zeigen:
- Fig. 1: eine schematische Darstellung zur Erläuterung des Meßprinzips (das gezeigte Beispiel liegt außerhalb der Erfindung) und
- Fig. 2: eine Ausführungsform der Erfindung in schematischer Darstellung mit einer Ankopplung des Sendeelements über Wellenleiter und einer separaten Referenzmessstrecke.

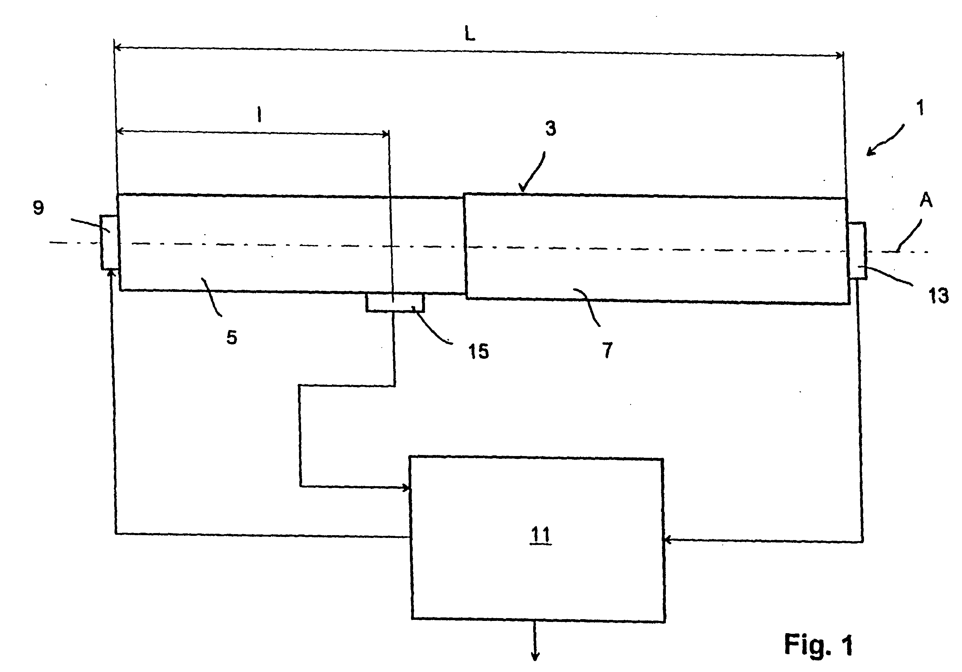

Das in Fig. 1 dargestellte Beispiel einer Vorrichtung 1 zur Abstandsmessung umfasst ein Teleskoprohr 3, welches im dargestellten Fall zwei ineinander verschiebbar ausgebildete Rohrelemente 5, 7 umfasst.

Am freien Ende des inneren Rohrelements 5 ist ein Sendeelement 9 vorgesehen, welches vorzugsweise als Ultraschall- Sendeelement ausgebildet ist. Das Sendeelement ist vorzugsweise so an der Stirnseite oder innerhalb des Rohrelements 5 angebracht, dass die Abstrahlung der akustischen Wellen in der Achse A des Teleskoprohrs erfolgt. Hierdurch wird erreicht, dass sich der wesentliche Teil des Schallfeldes in Richtung der Achse A ausbreitet und an den Innenseiten der Rohrwandungen reflektierte Anteile des Schallfeldes nicht zu einer Verfälschung der Messung führen oder eine aufwendige Signalauswertung erforderlich machen. Zur Ansteuerung des Sendeelements 9 ist eine Auswerte- und Steuereinheit 11 vorgesehen. Der Auswerte- und Steuereinheit 11 ist des Weiteren das Ausgangssignal eines Empfangselements 13 zugeführt. Das Empfangselement 13 ist wiederum vorzugsweise so am Ende oder innerhalb eines Endbereiches des äußeren Rohrelements 7 vorgesehen, dass die Achse der Empfangscharakteristik des Empfangselements mit der Achse A des Teleskoprohres 3 fluchtet.

Die Auswerte- und Steuereinheit 11 ermittelt die Weglänge bzw. den Abstand L zwischen dem Sendeelement 9 und dem Empfangselement 13 durch die Messung der Laufzeit eines pulsförmigen Signals. Die Laufzeit Δt kann von der Auswerteund Steuereinheit 11 durch die Erfassung der Zeitspanne zwischen dem elektrischen Ansteuersignal für das Sendeelement 9 und dem mittels des Empfangselements 13 empfangenen Signals bestimmt werden. Selbstverständlich können hierfür alle gängigen Methoden zur Signalauswertung verwendet werden, beispielsweise die Annäherung des Sende- und/oder Empfangssignals durch analytische Funktionen und die Bestimmung der Laufzeit Δt durch das Ermitteln des zeitlichen Abstands zwischen einander entsprechenden Extremwerten der analytischen Funktionen. Selbstverständlich kann auch eine Mitteilung mehrerer Messvorgänge erfolgen.

Bei der Verwendung lediglich eines einzigen Empfangselements 13 wird es in der Regel erforderlich sein, den Wert für die Signalgeschwindigkeit v_{S} in der Auswerte- und Steuereinheit 11 abzuspeichern, so dass der zu erfassende Abstand L nach der Beziehung L = v_{S} · Δt berechnet werden kann.

In Fällen, in denen ein Initialisierungsvorgang durchgeführt werden kann, können die Rohrelemente 5, 7 des Teleskoprohrs 3 in eine vordefinierte Position mit bekannter Länge bzw. bekanntem Abstand L₁ ineinandergeschoben werden. Durch die Messung der zugehörigen Laufzeit Δt₁ kann dann die Signalgeschwindigkeit v = L₁/Δt₁ ermittelt werden. Nach diesem Initialisierungsvorgang bzw. diesem Eichen der Vorrichtung zur Abstandsmessung können dann beliebige Abstände L unter Verwendung dieser in der vorstehenden Weise ermittelten Signalgeschwindigkeit v erfasst werden.

Mit einer derartigen Eichung der Vorrichtung 1 zur Abstandsmessung nach der Erfindung können auch Toleranzen der Charakteristika des Sendeelements 9 bzw. Temperatureinflüsse, die sich auf die Signalgeschwindigkeit v auswirken, kompensiert werden. Beispielsweise ändert sich die Signalgeschwindigkeit in einem in der KFZ-Technik relevanten Temperaturbereich von -40° C bis +150°C um ca. 30%. Verantwortlich hierfür sind sowohl die Änderung der Dichte des die akustischen Wellen übertragenden Mediums (vorzugsweise Luft) als auch Änderungen der Abstrahlcharakteristik und der Frequenz des Sendeelements 9.

Sollte ein Initialisierungsvorgang in der vorstehend erläuterten Weise nicht durchführbar sein, so besteht eine Möglichkeit zur Kompensation von Störeinflüssen auf die Signalgeschwindigkeit v darin, ein weiteres Sendeelement 15 am Teleskoprohr 3 vorzusehen. Beispielsweise kann das weitere Sendeelement 15 in einem vorbekannten Abstand 1 vom Sendeelement 9 am inneren Rohrelement 5 angeordnet sein. Hierdurch besteht wiederum die Möglichkeit, aus dem vorbekannten Abstand 1 und der in einem Referenz-Messvorgang erfassten zugehörigen Laufzeit Δtₗ die Signalgeschwindigkeit v zu ermitteln. Das weitere Empfangselement 15 kann beispielsweise, wie in der Figur dargestellt, am Umfang des betreffenden Rohrelements angeordnet sein. Selbstverständlich ist jedoch auch jede andere Art der Anbringung des weiteren Empfangselements 15 möglich, die eine sichere Signalerfassung und damit eine sichere Erfassung der Laufzeit Δtₗ gewährleistet.

Das weitere Empfangselement 15 kann in nicht dargestellter Weise auch an demjenigen Rohrelement 7 vorgesehen sein, an welchem das Empfangselement 13 angeordnet ist. Die Erfassung der Laufzeit erfolgt dann nicht mehr über die Bestimmung der Laufzeitdifferenz zwischen dem Ansteuersignal für das Sendeelement 9 und dem Empfangssignal des Empfangselements 13, sondern durch die Bestimmung der Laufzeit zwischen dem Empfangssignal des weiteren Empfangselement 15 und dem Signal des Empfangselements 13, wobei selbstverständlich von beiden Empfangselementen 15, 13 derselbe Impuls bzw. Impulszug zu erfassen ist.

In einer weiteren, nicht dargestellten Ausführungsform der Erfindung kann das Empfangselement 13 auch in derselben transversalen Ebene des Teleskoprohrs 3 vorgesehen sein, wie das Sendeelement 9. In diesem Fall muss am letzten Rohrelement (im Ausführungsbeispiel das Rohrelement 7) eine reflektierende Wandung vorgesehen sein. Damit erfolgt die Bestimmung der Länge bzw. des Abstands L nach der Beziehung L = v · Δt/2, da das Sendesignal nunmehr den doppelten Signalweg zurücklegt.

Werden als Sendeelement 9 und Empfangselement 13 Ultraschall-Wandler verwendet, so kann das Sendeelement und das Empfangselement auch durch die Verwendung eines einzigen Ultraschall-Wandlers realisiert werden, da dieser sowohl als Sender als auch als Empfänger zu betreiben ist.

In diesem Fall muss jedoch dafür Sorge getragen werden, dass die minimal erfassbare Länge L bzw. die sich in diesem Fall ergebende Signallaufzeit Δt geringer ist als die sogenannte Blindzeit des Ultraschall-Wandlers. Als Blindzeit wird diejenige Zeitspanne bezeichnet, die nach dem Abschalten eines den Ultraschall-Wandler ansteuernden Sendesignals vergeht, bis dieser ausgeschwungen hat. Erst nach Ablauf dieser Blindzeit steht der Wandler in vollem Umfang als Empfangselement zur Verfügung.

In einem konkreten Anwendungsfall für einen Einsatz zur Abstandsmessung kann beispielsweise das innere Rohrelement 5 ortsfest mit dem Chassis eines KFZ verbunden werden und das äußere Rohrelement 7 am verschiebbar ausgebildeten Sitz befestigt sein. Bei einem Verschieben des Sitzes wird demzufolge die Länge L des Teleskoprohrs verändert. Diese Änderung bzw. der Absolutwert der Rohrlänge wird durch die Vorrichtung zur Abstandsmessung erfasst.

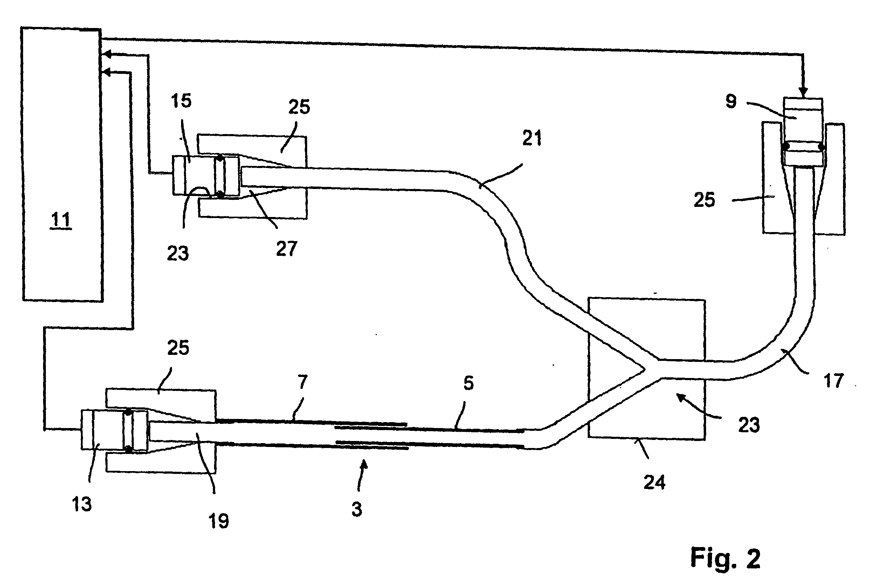

Bei der in Fig. 2 dargestellten Ausführungsform der Erfindung erfolgt die Ankoppelung des Sendeelements 9 mittels eines Ankoppelwellenleiters 17. Hierdurch ergibt sich die Möglichkeit, das Sendeelement bei beengten Platzverhältnissen an einer anderen Stelle unterzubringen. Bei der Ermittlung des zu erfassenden Abstands L muss die Länge des Ankoppelwellenleiters 17 selbstverständlich in entsprechender Weise berücksichtigt werden. Dies kann durch die einfache Subtraktion der Länge des Ankoppelwellenleiters von der aus der Signallaufzeit und der Signalgeschwindigkeit und der Stellung des Teleskoprohres abhängigen Gesamtlänge geschehen.

Die Ankoppelung des Empfangselements 13 an das äußere Rohrelement 7 des Teleskoprohres 3 erfolgt in dem in Fig. 2 dargestellten Ausführungsbeispiels ebenfalls mittels eines Auskoppelwellenleiters 19. Die Länge des Auskoppelwellenleiters 19 muss selbstverständlich wiederum bei der Ermittlung des zu erfassenden Abstands berücksichtigt werden.

Weiterhin unterscheidet sich das in Fig. 2 dargestellte Ausführungsbeispiel von dem erläuternden Beispiel gemäß Fig. 1 dadurch, dass das weitere Empfangselement 15 zur Kompensation von insbesondere Temperaturänderungen nicht am Teleskoprohr 3 sondern an einem separaten Differenz-Auskoppelwellenleiter 21 vorgesehen ist. Der Referenz-Auskoppelwellenleiter 21 zweigt vom Ankoppelwellenleiter 17 an einer Koppelstelle 23 ab. Die Koppelstelle 23 kann beispielsweise mittels eines Koppelelements 24 realisiert werden, in welchem ein Y-förmiger Kanal vorgesehen ist. An den Anschlussstellen des Koppelelements können dann entsprechende Wellenleiter angeschlossen werden.

Die Gesamtlänge des Ankoppelwellenleiters bis zur Koppelstelle 23 und des hier abzweigenden Differenz-Auskoppelwellenleiters 21 ist wiederum konstant, so dass sich aus dieser vorbekannten Länge und der mittels des weiteren Empfangselements 15 detektierten Signallaufzeit die Signalgeschwindigkeit bestimmen lässt.

Selbstverständlich ist bei dieser Ausführungsform darauf zu achten, dass sich die Signalgeschwindigkeit im Referenz-Auskoppelwellenleiter nicht oder allenfalls in tolerierbarem Maße von der Signalgeschwindigkeit im Ankoppelwellenleiter 17 bzw. im Teleskoprohr 3 unterscheidet.

Als Koppelwellenleiter können beispielsweise starre Kunststoffrohre oder flexible Kunststoffschläuche verwendet werden.

Des Weiteren zeigt Fig. 2 für die dargestellten Sende-/Empfangselemente eine spezielle Ankoppelungsmöglichkeit. Das eigentliche Sendeelement 9 bzw. die eigentlichen Empfangselemente 13, 15 sind in entsprechenden Ausnehmungen 23 von Koppeleinrichtungen 25 aufgenommen. Der jeweilige Koppelwellenleiter 17, 19 bzw. 21 ist mit seiner Stirnseite bis auf einen geringen Luftspalt an die Membran des Sendeelements bzw. Empfangselement herangeführt. Hierdurch ergibt sich der Vorteil, dass im Wesentlichen nur solche Signale in den betreffenden Wellenleiter eingekoppelt werden, die in der Achse der Wellenleiter verlaufen. Die Achse des Sendeelements bzw. der Empfangselemente sind hierzu fluchtend mit der Achse der Koppelwellenleiter ausgerichtet.

Des Weiteren ist in den Endbereichen der Koppelwellenleiter innerhalb der Koppeleinrichtungen 25 ein Ringraum 27 vorgesehen, welcher sich in Richtung auf das Sendeelement bzw. Empfangselement ausgehend vom Außenumfang des Koppelwellenleiters konisch erweitert. Hierdurch wird erreicht, dass sich solche Signalteile, die infolge ihres großen Winkels zur Achse des Wellenleiters aus dem Spalt zwischen der Stirnseite des Wellenleiters und dem Sende- und Empfangselement in den Ringraum austreten und sich in diesem "totlaufen" bzw. absorbiert werden. Hierdurch wird insbesondere eine negative Beeinträchtigung des Sendeelements 9 durch reflektierte Anteile vermieden.

Um eine möglichst optimale Dämpfung der nicht in den Wellenleiter eingekoppelten Signalanteile zu erreichen, kann der Ringraum 27 auch mittels eines Dämmstoffes ausgefüllt sein bzw. können an der Innenwandung des Ringraums 27 Strukturen zur Absorption der betreffenden Wellenanteile vorgesehen sein.

Während der Ringraum 27 der Koppeleinrichtung 25 im Fall des Sendeelements 9 dazu dient, nicht in den Wellenleiter 17 eingekoppelte Signalanteile zu vernichten. Um störende Reflektionen in Richtung auf die Membran des Sendeelements 9 zu vermeiden, dient der betreffende Ringraum 27 im Fall der Empfangselemente 13, 15 dazu, aus dem Luftspalt zwischen der Stirnseite des Koppelwellenleiters und der Membran des Empfangselements austretende Signalanteile zu vernichten, ebenfalls um störende Reflektionen in Richtung auf die Membran zu vermeiden.

## Patentansprüche

1. Vorrichtung zur Abstandsmessung
a) mit einem Ultraschallsendeelement (9) für das Aussenden akustischer Wellen, welches an einem ersten Ende eines zu messenden Abstands (L) oder in einem vorbekannten Abstand vom ersten Ende vorgesehen ist und
b) mit einem Ultraschallempfangselement (13) für das Empfangen der ausgesandten akustischen Wellen, welches für den Empfang der am anderen zweiten Ende des zu messenden Abstands (L) reflektierten Wellen am ersten Ende des zu messenden Abstands (L) oder in einem vorbekannten Abstand vom ersten Ende oder für den direkten Empfang der Wellen am zweiten Ende des zu messenden Abstands (L) oder in einem vorbekannten Abstand vom zweiten Ende vorgesehen ist, sowie
c) mit einer Auswerte- und Steuereinheit (11) zur Ansteuerung des Ultraschallsendeelements (9) mit einem gepulsten Signal und zur Erfassung und Auswertung des Signals des Ultraschallempfangselements (13), wobei der zu messende Abstand (L) aus der Laufzeit des Signals und der Signalgeschwindigkeit sowie gegebenenfalls von dem oder den vorgegebenen Abständen des Ultraschallsendeelements (9) und/oder des Ultraschallempfangselements (13) vom ersten oder zweiten Ende des zu messenden Abstands (L) bestimmt wird,
d) wobei zwischen dem ersten und zweiten Ende des zu messenden Abstands (L) ein Teleskoprohr (3) mit wenigstens zwei ineinandergreifenden Rohrelementen (5, 7) vorgesehen ist, wobei das Ultraschallsendeelement (9) und das Ultraschallempfangselement (13) jeweils in oder an den Rohrelementen (5; 7) vorgesehen sind oder über Wellenleiter mit den Rohrelementen verbunden sind, und
e) wobei wenigstens eines der wenigstens zwei Rohrelemente (5, 7) mit einem ortsveränderlich bewegbaren Element koppelbar ist,
**dadurch gekennzeichnet**,
f) dass zur Ankopplung des Ultraschallsendeelements (9) die Stirnseite des Teleskoprohres (3) oder die Stirnseite des Wellenleiters zur Verbindung des Ultraschallsendeelements mit dem Teleskoprohr bis unmittelbar vor die Membran des Ultraschallsendeelements geführt ist,
g) dass der Durchmesser der Membran größer ist als der Durchmesser der Stirnseite des Teleskoprohres oder des Wellenleiters und
h) dass im Endbereich des Teleskoprohres oder des Wellenleiters ein sich in Richtung der Membran des Ultraschallsendeelements konisch erweiternder Ringraum vorgesehen ist.

2. Vorrichtung nach Anspruch 1, **dadurch gekennzeichnet, dass** der Ringraum mit einem Dämmmaterial ausgefüllt ist.

3. Vorrichtung nach Anspruch 1 oder 2, **dadurch gekennzeichnet, dass** in oder an dem Rohrelement (5), in oder an welchem das Ultraschallsendeelement (9) vorgesehen ist oder mit welchem das Ultraschallsendeelement (9) mittels eine Wellenleiters verbunden ist, oder in oder an dem Wellenleiter, mit welchem das Ultraschallsendeelement (9) mit dem Rohrelement (5) verbunden ist, ein weiteres Ultraschallempfangselement (13) vorgesehen oder mittels eines Wellenleiters damit verbunden ist und dass die Auswerte- und Steuereinheit (11) aus dem bekannten Abstand (1) zwischen dem-Ultraschallsendeelement (9) und dem weiteren Ultraschallempfangselement (15) die Signalgeschwindigkeit und/oder Änderungen der Signalgeschwindigkeit ermittelt und diese zur Bestimmung des Abstands (L) aus der mittels des Ultraschallsendeelements (9) und des Ultraschallempfangselements (13) erfassten Signallaufzeit verwendet.

4. Vorrichtung nach Anspruch 1 oder 2, **dadurch gekennzeichnet, dass** in oder an dem Rohrelement (7), in oder an welchem das Ultraschallempfangselement (13) vorgesehen ist, ein weiteres Ultraschallempfangselement vorgesehen ist und dass die Auswerte- und Steuereinheit (11) aus dem bekannten Abstand zwischen dem Ultraschallempfangselement (13) und dem weiteren Ultraschallempfangselement (15) die Signalgeschwindigkeit und/oder Änderungen der Signalgeschwindigkeit ermittelt und zur Bestimmung des Abstands (L) aus der mittels des Ultraschallsendeelements (9) und des Ultraschallempfangselements (13) erfassten Signallaufzeit verwendet.

5. Vorrichtung nach einem der vorhergehenden Ansprüche, **dadurch gekennzeichnet, dass** das Ultraschallsendeelement (9) und das Ultraschallempfangselement (13) im Wesentlichen in der Achse (A) des Teleskoprohres (3) angeordnet oder die Wellenleiter zur Verbindung des Ultraschallsendeelements (9) und/oder des Ultraschallempfangselements (13) mit dem Teleskoprohr im Wesentlichen in der Achse (A) des Teleskoprohres (3) mit diesem verbunden sind.

6. Vorrichtung nach Anspruch 4 oder 5, **dadurch gekennzeichnet, dass** die Umfangswandungen des Teleskoprohrs (3) Durchbrüche zur Dämpfung von Reflexionen aufweisen.

7. Vorrichtung nach einem der vorhergehenden Ansprüche, **dadurch gekennzeichnet, dass** das Ultraschallsendeelement (9) und das Ultraschallempfangselement (13) als integriertes Ultraschall-Sende-/Empfangselement ausgebildet sind.

8. Vorrichtung nach einem der vorhergehenden Ansprüche, **dadurch gekennzeichnet, dass** die Auswerte- und Steuereinheit (11) mit dem Teleskoprohr (3) integriert ausgebildet ist.

9. Vorrichtung nach einem der vorhergehenden Ansprüche **dadurch gekennzeichnet, dass** die Auswerte- und Steuereinheit (11) im Teleskoprohr (3) vorgesehen ist

## Claims

1. Device for measuring distance
a) having an ultrasonic transmitter element (9) for emitting acoustic waves, which is provided at a first end of a distance (L) to be measured or at a previously known distance from the first end, and
b) having an ultrasonic receiver element (13) for receiving the emitted acoustic waves, which, to receive the waves reflected at the other second end of the distance (L) to be measured, is provided at the first end of the distance (L) to be measured or at a previously known distance from the first end, or to receive the waves directly, is provided at the second end of the distance (L) to be measured or at a previously known distance from the second end, and
c) having an evaluation and control unit (11) for actuating the ultrasonic transmitter element (9) with a pulsed signal and for sensing and evaluating the signal of the ultrasonic receiver element (13), the distance (L) to be measured being determined from the transit time of the signal and the signal speed as well as, if appropriate, by the predetermined distance or distances of the ultrasonic transmitter element (9) and/or the ultrasonic receiver element (13) from the first or second end of the distance (L) to be measured,
d) a telescopic tube (3) with at least two tubular elements (5, 7) which engage one in the other being provided between the first and second ends of the distance (L) to be measured, the ultrasonic transmitter element (9) and the ultrasonic receiver element (13) each being provided in or on the tubular elements (5, 7) or being connected to the tubular elements by means of waveguides, and
e) at least one of the at least two tubular elements (5, 7) being able to be coupled to an element whose location can be changed, **characterized**
f) in that, in order to connect the ultrasonic transmitter element (9), the end of the telescopic tube (3) or the end of the waveguide is led to directly before the diaphragm of the ultrasonic transmitter element in order to connect the ultrasonic transmitter element to the telescopic tube,
g) in that the diameter of the diaphragm is larger than the diameter of the end of the telescopic tube or of the waveguide, and
h) in that an annular space which extends conically in the direction of the diaphragm of the ultrasonic transmitter element is provided in the end region of the telescopic tube or of the waveguide.

2. Device according to Claim 1, **characterized in that** the annular space is filled with an insulating material.

3. Device according to Claim 1 or 2, **characterized in that** a further ultrasonic receiver element (13) is provided in or on the tubular element (5), in or on which the ultrasonic transmitter element (9) is provided or with which the ultrasonic transmitter element (9) is connected by means of a waveguide, or in or on the waveguide with which the ultrasonic transmitter element (9) is connected to the tubular element (5), or the said further ultrasonic receiver element (13) is connected to said ultrasonic transmitter element (9) by means of a waveguide, and **in that** the evaluation and control unit (11) determines, from the known distance (1) between the ultrasonic transmitter element (9) and the further ultrasonic receiver element (15), the signal speed and/or changes in the signal speed and uses the latter to determine the distance (L) from the signal transit time sensed by means of the ultrasonic transmitter element (9) and the ultrasonic receiver element (13).

4. Device according to Claim 1 or 2, **characterized in that** a further ultrasonic receiver element is provided in or on the tubular element (7), in or on which the ultrasonic receiver element (13) is provided, and **in that** the evaluation and control unit (11) determines the signal speed and/or changes in the signal speed from the known distance between the ultrasonic receiver element (13) and the further ultrasonic receiver element (15) and uses said signal speed and/or changes in the signal speed to determine the distance (L) from the signal transit time sensed by means of the ultrasonic transmitter element (9) and the ultrasonic receiver element (13).

5. Device according to one of the preceding claims, **characterized in that** the ultrasonic transmitter element (9) and the ultrasonic receiver element (13) are arranged essentially on the axis (A) of the telescopic tube (3), or the waveguides are connected to the telescopic tube (3) essentially on the axis (A) of said telescopic tube (3) in order to connect the ultrasonic transmitter element (9) and/or the ultrasonic receiver element (13) to the telescopic tube.

6. Device according to Claim 4 or 5, **characterized in that** the circumferential walls of the telescopic tube (3) have openings for damping reflections.

7. Device according to one of the preceding claims, **characterized in that** the ultrasonic transmitter element (9) and the ultrasonic receiver element (13) are embodied as an integrated ultrasonic transmitter/receiver element.

8. Device according to one of the preceding claims, **characterized in that** the evaluation and control unit (11) is embodied integrated with the telescopic tube (3).

9. Device according to one of the preceding claims, **characterized in that** the evaluation and control unit (11) is provided in the telescopic tube (3).

## Revendications

1. Dispositif de mesure de distances, comprenant
a) un élément (9) émetteur d'ultrasons, destiné à émettre des ondes acoustiques et prévu à une première extrémité d'une distance (L) à mesurer, ou à une distance préalablement connue vis-à-vis de ladite première extrémité, et
b) un élément (13) récepteur d'ultrasons, qui est destiné à recevoir les ondes acoustiques émises et qui est prévu à la première extrémité de la distance (L) à mesurer ou à une distance préalablement connue vis-à-vis de ladite première extrémité, en vue de la réception des ondes réfléchies à l'autre extrémité ou seconde extrémité de ladite distance (L) à mesurer ; ou bien, en vue de la réception directe des ondes, à la seconde extrémité de la distance (L) à mesurer, ou à une distance préalablement connue vis-à-vis de ladite seconde extrémité, ainsi
c) qu'une unité (11) d'interprétation et de commande, conçue pour activer l'élément (9) émetteur d'ultrasons par un signal pulsé, et pour capter et interpréter le signal de l'élément (13) récepteur d'ultrasons, la distance (L) à mesurer étant déterminée sur la base de la durée du signal et de la vitesse dudit signal, ainsi qu'éventuellement à partir de la ou des distance(s) pré-établie(s) dudit élément (9) émetteur d'ultrasons et/ou dudit élément (13) récepteur d'ultrasons, vis-à-vis de la première ou de la seconde extrémité de la distance (L) à mesurer,
d) un tube télescopique (3), comprenant au moins deux éléments tubulaires (5, 7) pénétrant l'un dans l'autre, étant prévu entre les première et seconde extrémités de la distance (L) à mesurer, l'élément (9) émetteur d'ultrasons et l'élément (13) récepteur d'ultrasons étant respectivement prévus dans ou sur lesdits éléments tubulaires (5 ; 7), ou étant reliés auxdits éléments tubulaires par l'intermédiaire de guides d'ondes, et
e) au moins l'un des deux éléments tubulaires (5, 7), prévus au minimum, pouvant être accouplé à un élément doué de mobilité,
**caractérisé par** le fait
f) que, en vue de l'accouplement de l'élément (9) émetteur d'ultrasons, la face extrême du tube télescopique (3), ou la face extrême du guide d'ondes destiné à relier ledit élément émetteur d'ultrasons audit tube télescopique, est guidée jusqu'à venir se placer directement devant la membrane dudit élément émetteur d'ultrasons,
g) que le diamètre de la membrane est plus grand que le diamètre de la face extrême du tube télescopique ou du guide d'ondes, et
h) qu'une chambre annulaire, s'évasant coniquement en direction de la membrane de l'élément émetteur d'ultrasons, est prévue dans la région extrême du tube télescopique ou du guide d'ondes.

2. Dispositif selon la revendication 1, **caractérisé par le fait que** la chambre annulaire est comblée par un matériau d'isolation.

3. Dispositif selon la revendication 1 ou 2, **caractérisé par le fait qu'**un élément supplémentaire (13) récepteur d'ultrasons est prévu, avec raccordement éventuel au moyen d'un guide d'ondes, dans ou sur l'élément tubulaire (5) dans ou sur lequel l'élément (9) émetteur d'ultrasons est prévu, ou auquel ledit élément (9) émetteur d'ultrasons est relié au moyen d'un guide d'ondes, ou bien dans ou sur le guide d'ondes par lequel ledit élément (9) émetteur d'ultrasons est relié audit élément tubulaire (5) ; et **par le fait que** l'unité (11) d'interprétation et de commande établit la vitesse du signal et/ou des variations de la vitesse du signal, sur la base de la distance connue (1) entre l'élément (9) émetteur d'ultrasons et l'élément supplémentaire (15) récepteur d'ultrasons, et utilise ces données pour déterminer la distance (L) sur la base de la durée du signal captée au moyen dudit élément (9) émetteur d'ultrasons et de l'élément supplémentaire (13) récepteur d'ultrasons.

4. Dispositif selon la revendication 1 ou 2, **caractérisé par le fait qu'**un élément supplémentaire récepteur d'ultrasons est prévu dans ou sur l'élément tubulaire (7) dans ou sur lequel l'élément (13) récepteur d'ultrasons est prévu ; et **par le fait que** l'unité (11) d'interprétation et de commande établit la vitesse du signal et/ou des variations de la vitesse du signal sur la base de la distance connue entre l'élément (13) récepteur d'ultrasons et l'élément supplémentaire (15) récepteur d'ultrasons, et les utilise pour déterminer la distance (L) sur la base de la durée du signal captée au moyen de l'élément (9) émetteur d'ultrasons et de l'élément (13) récepteur d'ultrasons.

5. Dispositif selon l'une des revendications précédentes, **caractérisé par le fait que** l'élément (9) émetteur d'ultrasons et l'élément (13) récepteur d'ultrasons sont pour l'essentiel agencés suivant l'axe (A) du tube télescopique (3) ; ou bien les guides d'ondes, destinés à relier l'élément (9) émetteur d'ultrasons et/ou l'élément (13) récepteur d'ultrasons au tube télescopique, sont reliés audit tube télescopique (3) pour l'essentiel suivant l'axe (A) de ce dernier.

6. Dispositif selon la revendication 4 ou 5, **caractérisé par le fait que** les parois périphériques du tube télescopique (3) présentent des perforations en vue d'amortir des réflexions.

7. Dispositif selon l'une des revendications précédentes, **caractérisé par le fait que** l'élément (9) émetteur d'ultrasons et l'élément (13) récepteur d'ultrasons sont réalisés sous la forme d'un élément intégré émetteur/récepteur d'ultrasons.

8. Dispositif selon l'une des revendications précédentes, **caractérisé par le fait que** l'unité (11) d'interprétation et de commande est de réalisation intégrée avec le tube télescopique (3).

9. Dispositif selon l'une des revendications précédentes, **caractérisé par le fait que** l'unité (11) d'interprétation et de commande est prévue dans le tube télescopique (3).
